(19) Europäisches Patentamt
European Patent Office
Office européen des brevets

(11) EP 1 633 761 B1

(12) **FASCICULE DE BREVET EUROPEEN**

(45) Date de publication et mention de la délivrance du brevet:
**07.05.2008 Bulletin 2008/19**

(21) Numéro de dépôt: **04767350.4**

(22) Date de dépôt: **16.06.2004**

(51) Int Cl.:
***C07F 7/14*** *(2006.01)*

(86) Numéro de dépôt international:
**PCT/FR2004/001487**

(87) Numéro de publication internationale:
**WO 2004/113354 (29.12.2004 Gazette 2004/53)**

(54) **PROCEDE DE PREPARATION D' HALOGENOALKYLDIALKYL-CHLOROSILANE**

VERFAHREN ZUR HERSTELLUNG VON HALOGENALKYLDIALKYLCHLORSILAN

METHOD OF PREPARING HALOGENOALKYLDIALKYLCHLOROSILANE

(84) Etats contractants désignés:
**AT BE BG CH CY CZ DE DK EE ES FI FR GB GR HU IE IT LI LU MC NL PL PT RO SE SI SK TR**

(30) Priorité: **17.06.2003 FR 0350222**

(43) Date de publication de la demande:
**15.03.2006 Bulletin 2006/11**

(73) Titulaire: **RHODIA CHIMIE**
**92512 Boulogne-Billancourt (FR)**

(72) Inventeurs:
- **GUENNOUNI, Nathalie**
**F-69540 Irigny (FR)**
- **GALLAND, Jean-Christophe**
**08540 PRINCETON, NJ (US)**

(74) Mandataire: **Delenne, Marc et al**
**Rhodia Services,**
**Direction de la Propriété Industrielle,**
**40, rue de la Haie-Coq**
**93306 Aubervilliers Cedex (FR)**

(56) Documents cités:
**EP-A- 0 709 390**
**EP-A- 0 722 947**
**EP-A- 0 738 730**
**EP-A- 0 738 731**
**EP-A- 0 751 140**
**EP-A- 0 786 465**
**EP-A- 0 850 943**
**EP-A- 1 156 052**
**WO-A-20/04009607**
**DE-C- 10 053 037**
**DE-C- 10 232 663**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 633 761 B1

## Description

La présente invention concerne un procédé de préparation d'halogénoalkyldialkylhalogénosilane.

Plus particulièrement, la présente invention concerne un procédé de préparation de 3-halopropyldiméthylchlorosilane, par hydrosilylation du diméthylhydrogénochlorosilane au moyen de chlorure d'allyle et d'un catalyseur à base d'un métal de la mine du platine, en particulier l'iridium, et récupération éventuelle dudit métal.

La réaction en cause dans cet exemple est la suivante :

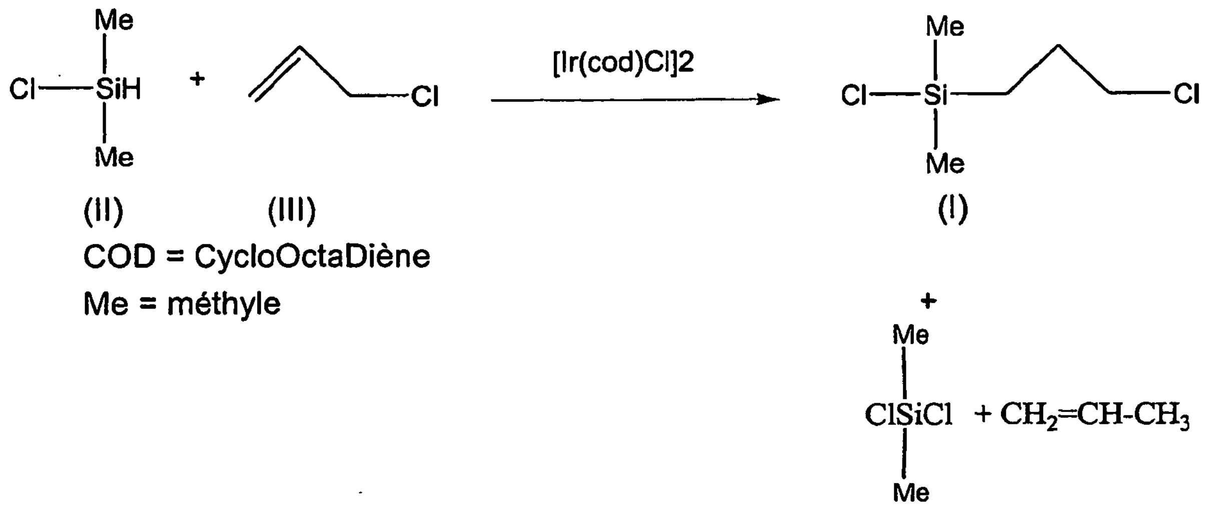


(II) (III) (I)

COD = CycloOctaDiène

Me = méthyle

Dans ce type de réaction, les quantités de métal de la mine de platine engagées sont souvent élevées dans le but d'obtenir un rendement satisfaisant. Dans ces conditions, pour que le procédé reste économiquement intéressant, il est nécessaire de récupérer le métal de la mine du platine pour pouvoir le réutiliser comme catalyseur.

Une autre voie d'amélioration de l'économie du procédé serait d'optimiser l'activité du catalyseur. Pour ce faire de faire en sorte que soit accru le taux de transformation (TT) de l'hydrogénosilane (II) ou que, pour un TT donné, la sélectivité (S) du catalyseur soit significativement augmentée.

Dans le présent exposé, le taux de transformation (TT) et la sélectivité (S) répondent aux définitions suivantes :

$$TT = \frac{\text{nombre de moles de motifs SiH consommées}}{\text{nombre de moles de motifs SiH ou de (II) introduites}}$$

$$S = \frac{\text{nombre de moles de (I)}}{\text{nombre de moles de motifs SiH ou de (II) introduites}}$$

L'hydrosilylation du chlorure d'allyle par le diméthylhydrogénochlorosilane catalysée par un catalyseur à base d'Iridium est décrite dans les documents brevets suivants : JP-B-2938731 & JP-A-7126271. Les catalyseurs décrits dans ces documents brevets sont du type $[Ir(diène)Cl]_2$ et permettent d'accéder à des taux de transformation complets (TT=100%) du diméthylhydrogénochlorosilane avec une bonne sélectivité de la réaction ( bon rendement RT en 3-chloropropyldiméthylchlorosilane). Cependant, ces performances sont atteintes au prix de quantités très importantes de catalyseur.

L' EP-A-1 156 052 (= US-B-6 359 161) ainsi que le DE-A-10053037 (US-A-2002/0052520) divulguent :

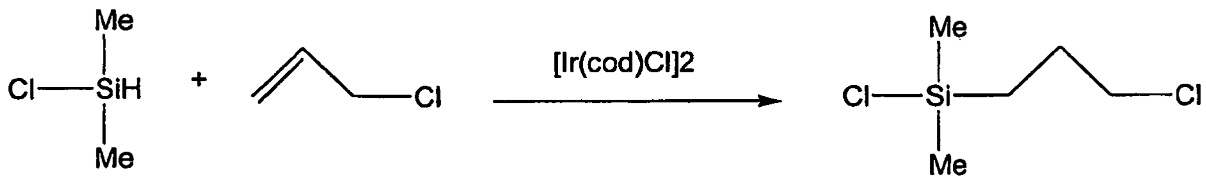


en présence de COD libre pour augmenter le rendement :

➢ EP-A-1 156 052 : $4.10^{-3}$ mole de COD libre pour $1.10^{-4}$ mole de $[Ir(COD)Cl]_2$ : soit un ratio 40
➢ versus DE-A-10053037 : $9,2.10^{-4}$mole de COD libre pour $4,5.10^{-6}$ mole de $[Ir(COD)Cl]_2$ : soit un ratio de 204.

Le BE-B-785343 (US-B-3 798 252) décrit l'hydrosilylation de chlorure d'allyle par du trichlorohydrogénosilane, en présence d'acide chloroplatinique en solution dans de la cyclohexanone (élimination d'eau dans cette solution à l'aide de $Na_2SO_4$). La cétone est combinée au platine afin d'améliorer la sélectivité de la réaction.
Dans cet état de la technique, l'un des objectifs essentiels de la présente invention est de proposer un moyen permettant d'optimiser l'activité du catalyseur à base d'iridium par rapport à ce qui est enseigné dans l'art antérieur [notamment EP-A-1 156 052 (= US-B-6 359 161) ainsi que DE-A-10053037 [US-A-2002/0052520].
Un autre objectif essentiel de l'invention est de fournir un procédé de préparation d'un halogénoalkyldialkylhalogénosilane du type ci-dessus, qui soit performant, économique et facile à mettre en oeuvre.
Ces objectifs, parmi d'autres, sont atteints par l'invention qui concerne, en premier lieu, un procédé de préparation d'un halogénoalkyldialkylhalogénosilane de formule (I) :

$$Hal\text{-----}(R^2R^3)Si\text{---}(CH_2)_s\text{---}Hal$$

par réaction d'hydrosilylation d'un milieu réactionnel comportant :

■ un silane de formule (II) :

$$Hal\text{---}(R^2R^3)Si\text{-}H$$

■ et un halogénure d'alcène de formule (III) :

$$CH{=}CH\text{-}(CH_2)_{s-2}Hal$$

■ en présence d'une quantité catalytiquement efficace d'un catalyseur d'hydrosilylation à base d'iridium de degré d'oxydation I ou III,

formules (I), (II), (III) dans lesquelles :

- le symbole Hal représente un atome d'halogène choisi parmi les atomes de chlore, brome et iode,
- les symboles $R^2$ et $R^3$, identiques ou différents, représentent chacun un groupe hydrocarboné monovalent choisi parmi un radical alkyle, linéaire ou ramifié, ayant de 1 à 6 atomes de carbone et un radical phényle, et
- s représente un nombre entier compris entre 2 et 10 inclus,

ledit procédé étant caractérisé en ce que l'on ajoute dans le milieu réactionnel au moins un auxiliaire à l'état libre ou supporté sélectionné dans le groupe de composés comprenant :

➢ (i) les cétones,
➢ (ii) les éthers,
➢ (iii) les quinones,
➢ (iv) les anhydrides,
➢ (v) les composés hydrocarbonés insaturés (CHI) ayant un caractère aromatique et/ou comportant au moins une double liaison carbone=carbone et/ou au moins une triple liaison C≡C, ces liaisons insaturées pouvant être conjuguées ou non conjuguées, lesdits CHI : étant linéaires ou cycliques (mono ou polycyclique), ayant de 4 à 30 atomes de carbone, ayant de 1 à 8 insaturations éthyléniques et/ou acétyléniques et comportant éventuellement un ou

plusieurs hétéroatomes,
➢ (vi) et leurs mélanges,

avec la condition selon laquelle quand l'auxiliaire comprend un ou plusieurs CHI tels que definis supra, alors ce (ces) CHI est (sont) mélangé(s) avec au moins un autre auxiliaire différent d'un CHI.

Conformément à la présente invention, on entend notamment par "mélanges (vi)" de composés auxiliaires :

o (vi.1). tout mélange de composés (i) et/ou (ii) et/ou (iii) et/ou (iv) et/ou (v),
o (vi.2). tout composé dont la molécule comprend au moins deux fonctions chimiques différentes et sélectionnées dans le groupe comprenant les fonctions : cétone, éther, anhydride, quinone, C=C, et C C, caractéristiques des composés (i) à (v),
o (vi.3) tout mélange de composés (vi.2),
o (vi.4) ainsi que tout mélange à base d'au moins un composé (i) à (v) et d'au moins un composé (vi.2).

Selon un mode préféré, on utilise un catalyseur à base d'iridium de degré d'oxydation I dans la structure duquel chaque atome d'iridium répond à la forme complexe du type **Ir (L)$_3$ X** où les symboles **L** et **X** ont les définitions données dans l'ouvrage "Chimie Organométallique de Didier ASTRUC", publié en 2000 par EDP Sciences (cf. notamment page 31 et suivantes).

Suivant un mode plus préféré, le catalyseur répond à la formule (IV) :

$$[Ir(R^4)_x(R^5)]_y \qquad (IV)$$

dans laquelle :

- le symbole $R^4$ représente soit un ligand monodentate L et dans ce cas x = 2, soit un ligand bidentate $(L)_2$ et dans ce cas x = 1, et
- le symbole $R^5$ représente, soit Hal tel que défini supra, et dans ce cas y = 2, soit un ligand de type LX et dans ce cas y = 1.

Conviennent bien des catalyseurs répondant à la définition plus préférée précitée dans laquelle :

- $R^4$ est un ligand comportant au moins une double liaison carbone=carbone et/ou au moins une triple liaison C≡C, ces liaisons insaturées pouvant être conjuguées ou non conjuguées, ledit ligand : étant linéaire ou cyclique (mono ou polycyclique), ayant de 4 à 30 atomes de carbone, ayant de 1 à 8 insaturations éthyléniques et/ou acétyléniques et comportant éventuellement un ou plusieurs hétéroatomes, et
- $R^5$, outre Hal, peut représenter aussi un ligand LX comme notamment un ligand dérivé de l'acétylacétone, d'un β-cétoester, d'un ester malonique, d'un composé allylé.

Suivant un mode encore plus préféré, le catalyseur répond à la formule (IV) où le symbole $R^5$ du catalyseur représente Hal et y = 2.

Les ligands $R^4$ du catalyseur (IV) préféré peuvent être identiques ou différents des CHI (v) de l'auxiliaire.

Le catalyseur à base d'iridium peut être supporté comme cela est décrit par exemple dans l'US-B-6 177 585 et le GB-A-1526324

Le système catalytique utilisé conformément au procédé selon l'invention, permet de diminuer la quantité de catalyseur nécessaire à l'obtention d'un taux de transformation TT complet du silane de formule (II): Hal---($R^2R^3$)Si-H et/ou d'augmenter la sélectivité S pour un TT donné et fixe.

Ce système catalytique est avantageusement constitué :

❖ d'un catalyseur organométallique à base d'iridium de degré d'oxydation I ou III,
❖ d'un ou plusieurs auxiliaires introduits chacun en quantité minimale de 20% molaire par rapport au métal.

Ce ou ces auxiliaires peuvent être utilisés sous forme liquide ou solide. Dès lors qu'ils sont liquides, ils peuvent être introduits en quantité telle dans le milieu réactionnel qu'ils jouent, en plus d'un rôle de promoteur d'hydrosilylation, un rôle de solvant de la réaction.

Le fait de pouvoir être mis en oeuvre sous forme liquide est un avantage opérationnel très fort pour le procédé de l'invention.

L'éventuelle fonction de solvant de l'auxiliaire peut également permettre, en particulier lorsqu'il s'agit d'un solvant lourd (à savoir un solvant ayant un point d'ébullition sous la pression atmosphérique qui est supérieur à celui

du composé de formule (I), comme par exemple un polyéther), d'améliorer la stabilité du milieu réactionnel et donc la sécurité du procédé. En outre, cela offre des possibilités de récupération aisée du catalyseur et donc de recyclage de ce dernier.

Lorsque l'auxiliaire est à l'état libre, il peut être introduit dans le milieu réactionnel selon un rapport molaire, par rapport à l'iridium métal, d'au moins 0,2, de préférence d'au moins 1. Selon la nature des ligands, on peut choisir plus préférentiellement un rapport molaire supérieur à 10 et même supérieur à 100.

Dans le cas où l'auxiliaire comprend au moins un composé sélectionné dans le groupe des CHI (v) pris en eux-mêmes ou en mélanges entre eux, la concentration en catalyseur (de préférence IV) est telle que le rapport molaire Iridium / silane de formule (II), exprimé en moles, est inférieur ou égal à $400.10^{-6}$, de préférence à $200.10^{-6}$, et, plus préférentiellement encore à $50.10^{-6}$.

Comme exemples de cétones (i) convenables, on peut se référer à celles définies dans l'US-B-3 798 252 et dans les PL-A-176036, PL-A-174810, PL-A-145670 et JP-A-75024947.

Comme exemples d'éthers (ii) convenables, on peut se référer à ceux définis dans l'US-B-4 820 674 et dans le JP-A-52093718.

Avantageusement, l'auxiliaire est sélectionné dans le groupe comprenant notamment :

> cyclohexanone, 2-cyclohexen-1-one, isophorone, 2-benzylidenecyclohexanone, 3-Methylene-2-norbornanone, 4-hexen-3-one, 2-allylcyclohexanone, 2-Oxo-1-cyclohexaneproprionitrile, 2-(1-cyclohexenyl)cyclohexanone, monoglyme, éthylène-glycoldivinyléther, éther éthylique, benzoquinone, phényl-benzoquinone, anhydride maléïque, anhydride succinique allylé, 3-benzylidène-2,4-pentadione, phénothiazine, (méthylvinyl)cyclotétrasiloxane (D4 vinylé), 4-phényl-3-butyn-2-one, butadiène-1,3, hexadiène-1,5, cyclohexadiène-1,3, cyclooctadiène-1,5 (COD), cyclododécatriène-1,5,9, divinyltétraméthylsiloxane (DVTMS), norbornadiène et leurs mélanges.

Selon un mode préféré de mise en oeuvre de l'invention, l'auxiliaire est un mélange (vi) comportant au moins un CHI (v) -de préférence le COD- et au moins une cétone (i) -de préférence la cyclohexanone- et/ou au moins un éther (ii) et/ou au moins une quinone (iii).

Dans ce mode préféré de mise en oeuvre du procédé selon l'invention, la concentration en catalyseur -de préférence de formule (IV)- est telle que le rapport molaire Iridium / silane de formule (II), exprimé en moles, est inférieur ou égal à $100.10^{-6}$, de préférence à $60.10^{-6}$, et, plus préférentiellement encore est compris entre $40.10^{-6}$ et $1.10^{-6}$.

Suivant une modalité opératoire propre à ce mode préféré de mise en oeuvre, les composants du mélange (vi) : CHI / (i) et/ou (ii) et/ou (iii) sont présents dans le milieu réactionnel lorsque la réaction démarre.

Comme exemples de complexes de l'iridium de formule (IV) qui conviennent spécialement bien, on citera ceux correspondant au mode encore plus préféré, dans la formule desquels : le symbole $R^4$ est un ligand choisi parmi le butadiène-1,3, l'hexadiène-1,5, le cyclohexadiène-1,3, le cyclooctadiène-1,5 (COD), le cyclododécatriène-1,5,9, le divinyltétraméthyl-siloxane et le norbornadiène.

A titre d'exemples spécifiques de complexes de l'iridium (IV) qui conviennent encore mieux, on citera les catalyseurs suivants :

> di-μ-chlorobis(η-1,5-hexadiene)diiridium,
> di-μ-bromobis(η-1,5-hexadiene)diiridium,
> di-μ-iodobis(η-1,5-hexadiene)diiridium,
> di-μ-chlorobis(η-1,5-cyclooctadiene)diiridium,
> di-μ-bromobis(η-1,5-cyclooctadiene)diiridium,
> di-μ-iodobis(η-1,5-cyclooctadiene)diiridium,
> di-μ-chlorobis(η-2,5-norbornadiene)diiridium,
> di-μ-bromobis(η-2,5-norbornadiene)diiridium,
> di-μ-iodobis(η-2,5-norbornadiene)diiridium.

Le procédé selon l'invention peut être mis en oeuvre soit de façon continue, soit de façon semi-continue, soit de façon discontinue.

Ces trois modes de fonctionnement conviennent notamment lorsque le catalyseur -de préférence IV- est utilisé en milieu liquide homogène, selon une disposition préférentielle de l'invention et comme cela est décrit dans JP-B-2 938 731 et EP-A-1 156 052.

Préférentiellement le produit de formule (I) est le 3-chloropropyldiméthylchlorosilane, le produit de formule (II) est le diméthylhydrogénochlorosilane et le produit de formule (III) est le chlorure d'allyle.

Selon un autre de ses aspects l'invention concerne, un système catalytique pour la préparation d'un halogénoalkyldialkyl-halogénosilane de formule (I) :

$$Hal\text{-----}(R^2R^3)Si\text{---}(CH_2)_s\text{---}Hal$$

par réaction d'hydrosilylation d'un milieu réactionnel comportant :

■ un silane de formule (II) :

$$Hal\text{---}(R^2R^3)Si\text{-}H$$

■ et un halogénure d'alcène de formule (III) :

$$CH{=}CH\text{-}(CH_2)_{s\text{-}2}Hal$$

formules dans lesquelles :

- le symbole Hal représente un atome d'halogène choisi parmi les atomes de chlore, brome et iode,
- les symboles $R^2$ et $R^3$, identiques ou différents, représentent chacun un groupe hydrocarboné monovalent choisi parmi un radical alkyle, linéaire ou ramifié, ayant de 1 à 6 atomes de carbone et un radical phényle, et
- s représente un nombre entier compris entre 2 et 10 inclus,

caractérisé en ce que qu'il comprend :

-1- un catalyseur d'hydrosilylation à base d'iridium de degré d'oxydation I dans la structure duquel chaque atome d'iridium répond à la forme complexe du type **Ir (L)$_3$ X** où les symboles **L** et **X** ont les définitions données dans l'ouvrage "Chimie Organométallique de Didier ASTRUC", publié en 2000 par EDP Sciences (cf. notamment page 31 et suivantes), ce catalyseur répondant de préférence à la formule :

$$[Ir(R^4)_x(R^5)]_y \qquad (IV)$$

dans laquelle :

- le symbole $R^4$ représente soit un ligand monodentate L et dans ce cas x = 2, soit un ligand bidentate $(L)_2$ et dans ce cas x = 1, et
- le symbole $R^5$ représente, soit Hal, représentant un atome d'halogène choisi parmi les atomes de chlore, brome et iode, et dans ce cas y = 2, soit un ligand de type LX et dans ce cas y = 1

-2- et au moins un auxiliaire, à l'état libre ou supporté, sélectionné dans le groupe de composés comprenant :

➢ (i) les cétones,
➢ (ii) les éthers,
➢ (iii) les quinones,
➢ (iv) les anhydrides,
➢ (v) les composés hydrocarbonés insaturés (CHI) ayant un caractère aromatique et/ou comportant au moins une double liaison carbone=carbone et/ou au moins une triple liaison C≡C, ces liaisons insaturées pouvant être conjuguées ou non conjuguées, lesdits CHI : étant linéaires ou cycliques (mono ou polycyclique), ayant de 4 à 30 atomes de carbone, ayant de 1 à 8 insaturations éthyléniques et/ou acétyléniques et comportant éventuellement un ou plusieurs hétéroatomes,
➢ (vi) et leurs mélanges,

avec la condition selon laquelle quand l'auxiliaire comprend un ou plusieurs CHI tels que définis supra, alors ce (ces) CHI est (sont) mélangé(s) avec au moins un autre auxiliaire différent d'un CHI.

**EXEMPLES**

Les exemples suivants illustrent l'invention sans en limiter la portée. Ils ont pour objet l'évaluation de systèmes catalytiques :

[di-μ-chlorobis(η-1,5-cyclooctadiene)diiridium + auxiliaire(s) d'hydrosilylation]

dans la réaction d'hydrosilylation du chlorure d'allyle par le diméthylhydrogénochlorosilane.

Les essais sont réalisés dans des réacteurs parallèles.

Chaque réacteur est muni d'un agitateur magnétique, d'un condenseur à reflux et d'un thermomètre. Le fluide caloporteur est porté à une température de -35°C, ce qui permet d'obtenir un bilan matière toujours supérieur à 95% massique.

L'effet des auxiliaires d'hydrosilylation est comparé à une réaction témoin où seul le di-μ-chlorobis(η-1,5-cyclooctadiène)diiridium a été utilisé. Pour cet essai témoin, une quantité volontairement faible en catalyseur a été introduite afin d'obtenir un taux de conversion des fonctions SiH de l'ordre de 50%.

Le diméthylhydrogénochlorosilane, de pureté 99% en poids, est ajouté par coulée sur un pied chauffé à 35°C et constitué du chlorure d'allyle (1.05 éq. Mol / silane) ainsi que du système catalytique [di-μ-chlorobis(η-1,5-cyclooctadiene)diiridium + auxiliaire(s) d'hydrosilylation]. Le silane est coulé par l'intermédiaire d'un pousse seringue à un débit de 1.3 ml/minute. La température du milieu réactionnel n'est pas régulée.

L'analyse du milieu réactionnel est réalisée par chromatographie phase gaz étalonnée au n-tetradécane.

**I:** *Auxiliaires d'hydrosilylation utilisés seuls :*

*1.1- Effet des cétones (i) :*

TABLEAU I

| Exemple | Cétone | Rapport molaire cétone / Ir | Rapport molaire Ir x $10^{-6}$ / $ClMe_2SiH$ | TT(%) | S (%) |
|---|---|---|---|---|---|
| 1 | Aucune | 0 | 235 | 94 | 76 |
| 2 | cyclohexanone | 100 | 235 | 80 | 91 |
| 3 | aucune | 0 | 130 | 50 | 82 |
| 4 | 2-Cyclohexen-1-one | 91 | 133 | 44 | 91 |
| 5 | 2-allylcyclohexanone | 100 | 133 | 41 | 92 |
| 6 | 2-(1- cyclohexenyl) cyclohexanone | 137 | 132 | 51 | 90 |
| 7 | 3-benzylidene-2,4-pentadione | 1.2 | 131 | 59 | 81 |
| 8 | 3-benzylidene-2,4-pentadione | 115 | 134 | 42 | 92 |

*1.2- effet des éthers (ii) :*

TABLEAU II

| Exemple | éthers | Rapport molaire éther / Ir | Rapport molaire Ir x $10^{-6}$ / $ClMe_2SiH$ | TT(%) | S (%) |
|---|---|---|---|---|---|
| 3 | Aucune | 0 | 130 | 50 | 82 |
| 9 | monoglyme | 109 | 131 | 60 | 81 |
| 10 | monoglyme | 260 | 136 | 45 | 86 |
| 11 | Ether éthylique | 740 | 134 | 60 | 89 |

*1.3 - effet des quinones (iii):*

TABLEAU III

| Exemple | quinones | Rapport molaire quinone / Ir | Rapport molaire Ir x $10^{-6}$ / $ClMe_2SiH$ | TT(%) | S (%) |
|---|---|---|---|---|---|
| 3 | Aucune | 0 | 130 | 50 | 82 |
| 12 | Benzoquinone | 93 | 141 | 40 | 94 |
| 13 | phényl benzoquinone | 1.1 | 137 | 51 | 84 |

*1.4 - effet des anhydrides (iv) :*

TABLEAU IV

| Exemple | anhydrides | Rapport molaire anhydride / Ir | Rapport molaire Ir x $10^{-6}$ / $ClMe_2SiH$ | TT(%) | S (%) |
|---|---|---|---|---|---|
| 3 | Aucune | 0 | 130 | 50 | 82 |
| 14 | anhydride succinique allylé | 103 | 133 | 47 | 87 |
| 15 | Anhydride maléïque | 1.7 | 131 | 43 | 84 |

*1.5 - effet des auxiliaires CHI (v)* ::

TABLEAU V

| Exemple | CHI (v) | Rapport molaire $R^4$ / Ir | Rapport molaire Ir x $10^{-6}$ / $ClMe_2SiH$ | TT(%) | S (%) |
|---|---|---|---|---|---|
| 3 | Aucun | 0 | 130 | *50* | *82* |
| 16 | D4 vinylé | 104 | 135 | 48 | 86 |
| 17 | phénothiazine | 1.1 | 132 | 55 | 83 |

**II :** *Association d'auxiliaires d'hydrosilylation :*

**II.** *1- association de cyclohexanone et de 1,5-cyclooctadiène (1,5-COD) :*

TABLEAU VI

| Exemple | Ir x $10^{-6}$ / $ClMe_2SiH$ | TT(%) | S(%) | Rapport molaire Cyclohexanone/Ir | Rapport molaire 1,5-COD / Ir |
|---|---|---|---|---|---|
| 18 | 51 | 21 | 70 | - | - |
| 19 | 49 | 15 | 82 | 189 | - |
| 20(1) | 50 | 29 | 85 | - | 135 |
| 21 | 51 | 94 | 96 | 170 | 110 |

(1) une conversion complète des fonctions SiH peut être obtenue en présence de 1,5-COD libre seulement si une concentration plus importante en [IrCODCl]2 est introduite dans le milieu.

**2.***2- association de l'éther éthylique et de 1,5-cyclooctadiène (1,5-COD) :*

TABLEAU VII

| Exemple | Ir x $10^{-6}$ / $ClMe_2SiH$ | TT(%) | S(%) | Rapport molaire éther éthylique/Ir | Rapport molaire 1,5-COD / Ir |
|---|---|---|---|---|---|
| 18 | 51 | 21 | 70 | - | - |
| 20 (1) | 50 | 29 | 85 | - | 135 |
| 22 | 51 | 100 | 98 | 100 | 148 |
| (1) une conversion complète des fonctions SiH peut être obtenue en présence de 1,5-COD libre seulement si une concentration plus importante en [IrCODCl]2 est introduite dans le milieu. | | | | | |

*2.3- association de la benzoquinone et de 1,5-cyclooctadiène (1,5-COD) :*

TABLEAU VIII

| Exemple | Ir x $10^{-6}$ / $ClMe_2SiH$ | TT(%) | S(%) | Rapport molaire benzoquinone/Ir | Rapport molaire 1,5-COD / Ir |
|---|---|---|---|---|---|
| 18 | 51 | 21 | 70 | - | - |
| 20 (1) | 50 | 29 | 85 | - | 135 |
| 23 | 50 | 100 | 97 | 51 | 110 |
| (1) une conversion complète des fonctions SiH peut être obtenue en présence de 1,5-COD libre seulement si une concentration plus Importante en [IrCODCl]2 est introduite dans le milieu. | | | | | |

**III : exemple 2.4 :** *reproduction de l'exemple* 2.1 avec *régulation de la température :*

Dans un tétracol de 500 ml, en verre, équipé d'un mobile d'agitation, surmonté d'un réfrigérant, on charge 92.48 g de chlorure d'allyle (1.194 mole), 0,011 g de catalyseur $[Ir(COD)Cl]_2$ où COD = 1,5-cyclooctadiène (2.829 $10^{-5}$ moles) ainsi que le COD (0.611 g ,5.648 mmoles) et la cyclohexanone (1.067 g, 10.9 mmoles). On agite pour dissoudre complètement le système catalytique.

Le diméthylhydrogénochlorosilane, de pureté 99% en poids est introduit par une pompe péristaltique dans le milieu réactionnel. On en introduit 107.15 g (1.117 moles) en 2 heures 30 minutes. Le débit d'introduction est ajusté pour maintenir la température du milieu réactionnel entre 20 et 25°C, en tenant compte de la forte exothermie de la réaction. Le milieu réactionnel est maintenu sous agitation pendant 20 minutes après la fin de l'introduction du diméthylhydrogénochlorosilane.

A la fin du temps de maintien, un échantillon est prélevé pour analyse. Les résultats sont les suivants :

TT du diméthylhydrogénochlorosilane = 99,8%,
S en chloropropyldiméthylchloro-silane = 98,3% (par analyse par chromatographie en phase gaz).

## Revendications

1. Procédé de préparation d'un halogénoalkyldialkylhalogénosilane de formule (I) :

$$Hal\text{-----}(R^2R^3)Si\text{---}(CH_2)_s\text{---}Hal$$

par réaction d'hydrosilylation d'un milieu réactionnel comportant :

■ un silane de formule (II) :

Hal---($R^2R^3$)Si-H

■ et un halogénure d'alcène de formule (III) :

$CH=CH-(CH_2)_{s-2}Hal$

■ en présence d'une quantité catalytiquement efficace d'un catalyseur d'hydrosilylation à base d'iridium de degré d'oxydation I ou III,

formules (I), (II), (III) dans lesquelles :

- le symbole Hal représente un atome d'halogène choisi parmi les atomes de chlore, brome et iode,
- les symboles $R^2$ et $R^3$, identiques ou différents, représentent chacun un groupe hydrocarboné monovalent choisi parmi un radical alkyle, linéaire ou ramifié, ayant de 1 à 6 atomes de carbone et un radical phényle, et
- s représente un nombre entier compris entre 2 et 10 inclus,

ledit procédé étant **caractérisé en ce que** l'on ajoute dans le milieu réactionnel au moins un auxiliaire à l'état libre ou supporté sélectionné dans le groupe de composés comprenant :

(i) les cétones,
(ii) les éthers,
(iii) les quinones,
(iv) les anhydrides,
(v) les composés hydrocarbonés insaturés (CHI) ayant un caractère aromatique et/ou comportant au moins une double liaison carbone=carbone et/ou au moins une triple liaison C≡C, ces liaisons insaturées pouvant être conjuguées ou non conjuguées, lesdits CHI : étant linéaires ou cycliques (mono ou polycyclique), ayant de 4 à 30 atomes de carbone, ayant de 1 à 8 insaturations éthyléniques et/ou acétyléniques et comportant éventuellement un ou plusieurs hétéroatomes,
(vi) et leurs mélanges,

avec la condition selon laquelle quand l'auxiliaire comprend un ou plusieurs CHI tels que definis supra, alors ce (ces) CHI est (sont) mélangé(s) avec au moins un autre auxiliaire différent d'un CHI.

**2.** Procédé selon la revendication 1, **caractérisé en ce que** l'on utilise un catalyseur répondant à la formule :

$[Ir(R^4)_x(R^5)]_y$ (IV)

dans laquelle :

- le symbole $R^4$ représente soit un ligand monodentate L et dans ce cas x = 2, soit un ligand bidentate $(L)_2$ et dans ce cas x = 1, et
- le symbole $R^5$ représente, soit Hal qui représente un atome d'halogène choisi parmi les atomes de chlore, brome et iode, et dans ce cas y = 2, soit un ligand de type LX et dans ce cas y = 1.

**3.** Procédé selon la revendication 2, **caractérisé en ce que** dans la formule **(IV) :**

o $R^4$ est un ligand comportant au moins une double liaison carbone=carbone et/ou au moins une triple liaison C=C, ces liaisons insaturées pouvant être conjuguées ou non conjuguées, ledit ligand : étant linéaire ou cyclique (mono ou polycyclique), ayant de 4 à 30 atomes de carbone, ayant de 1 à 8 insaturations éthyléniques et/ou acétyléniques et comportant éventuellement un ou plusieurs hétéroatomes, et
o $R^5$, outre Hal, peut représenter aussi un ligand LX comme notamment un ligand dérivé de l'acétylacétone, d'un β-cétoester, d'un ester malonique, d'un composé allylé.

**4.** Procédé selon la revendication 1, **caractérisé en ce que** l'auxiliaire est introduit dans le milieu réactionnel à l'état libre et selon un rapport molaire, par rapport à l'iridium métal, d'au moins 0,2, de préférence d'au moins 1 et plus préférentiellement d'au moins 100.

5. Procédé selon la revendication 1, **caractérisé :**

**en ce que** l'auxiliaire comprend au moins un composé sélectionné dans le groupe des CHI (v) pris en eux-mêmes ou en mélanges entre eux,
et **en ce que** la concentration en catalyseur (de préférence IV) est telle que le rapport molaire Iridium / silane de formule (II), exprimé en moles, est inférieur ou égal à $400.10^{-6}$, de préférence à $200.10^{-6}$, et, plus préférentiellement encore à $50.10^{-6}$.

6. Procédé selon l'une quelconque des revendications 1 à 5, **caractérisé en ce que** l'auxiliaire est sélectionné dans le groupe comprenant :

cyclohexanone, 2-cyclohexen-1-one, isophorone, 2-benzylidenecyclohexanone, 3-Methylene-2-norbornanone, 4-hexen-3-one, 2-allylcyclohexanone, 2-Oxo-1-cyclohexaneproprionitrile, 2-(1-cyclohexenyl)cyclohexanone, monoglyme, éthylène-glycoldivinyléther, éther éthylique, benzoquinone, phényl-benzoquinone, anhydride maléïque, anhydride succinique allylé, 3-benzylidène-2,4-pentadione, phénothiazine, (méthylvinyl)cyclotétrasiloxane (D4 vinylé), 4-phényl-3-butyn-2-one, butadiène-1,3, hexadiène-1,5, cyclohexadiène-1,3, cyclooctadiène-1,5 (COD), cyclododécatriène-1,5,9, divinyltétraméthylsiloxane (DVTMS), norbornadiène et leurs mélanges.

7. Procédé selon l'une quelconque des revendications 1 à 6, **caractérisé en ce que** l'auxiliaire est un mélange (vi) comportant au moins un CHI (v) -de préférence la COD- et au moins une cétone (i) -de préférence la cyclohexanone- et/ou au moins un éther (ii) et/ou au moins une quinone (iii).

8. Procédé selon la revendication 7 **caractérisé en ce que** la concentration en catalyseur - de préférence de formule (IV) - est telle que le rapport molaire Iridium / silane de formule (II), exprimé en moles, est inférieur ou égal à $100.10^{-6}$, de préférence à $60.10^{-6}$, et, plus préférentiellement encore est compris entre $40.10^{-6}$ et $1.10^{-6}$.

9. Procédé selon la revendication 7, **caractérisé en ce que** les composants du mélange (vi) : CHI / (i) et/ou (ii) et/ou (iii) sont présents dans le milieu réactionnel lorsque la réaction démarre.

10. Procédé selon l'une quelconque des revendications 1 à 9, **caractérisé en ce que** le produit de formule (I) est le 3-chloropropyldiméthylchlorosilane, le produit de formule (II) est le diméthylhydro-génochlorosilane et le produit de formule (III) est le chlorure d'allyle.

11. Système catalytique pour la préparation d'un halogénoalkyldialkyl-halogénosilane de formule (I) :

$$Hal\text{-----}(R^2R^3)Si\text{---}(CH_2)_s\text{---}Hal$$

par réaction d'hydrosilylation d'un milieu réactionnel comportant :

■ un silane de formule (II) :

$$Hal\text{---}(R^2R^3)Si\text{-}H$$

■ et un halogénure d'alcène de formule (III) :

$$CH{=}CH\text{-}(CH_2)_{s-2}Hal$$

formules dans lesquelles :

- le symbole Hal représente un atome d'halogène choisi parmi les atomes de chlore, brome et iode,
- les symboles $R^2$ et $R^3$, identiques ou différents, représentent chacun un groupe hydrocarboné monovalent choisi parmi un radical alkyle, linéaire ou ramifié, ayant de 1 à 6 atomes de carbone et un radical phényle, et
- s représente un nombre entier compris entre 2 et 10 inclus,

**caractérisé en ce qu'**il comprend :

-1- un catalyseur d'hydrosilylation répondant à la formule :

$$[Ir(R^4)_x(R^5)]_y \qquad (IV)$$

dans laquelle :

- le symbole $R^4$ représente soit un ligand monodentate L et dans ce cas x = 2, soit un ligand bidentate $(L)_2$ et dans ce cas x = 1, et
- le symbole $R^5$ représente, soit Hal qui représente un atome d'halogène choisi parmi les atomes de chlore, brome et iode, et dans ce cas y = 2, soit un ligand de type LX et dans ce cas y = 1

-2- et au moins un auxiliaire, à l'état libre ou supporté, sélectionné dans le groupe de composés comprenant :

(i) les cétones,
(ii) les éthers,
(iii) les quinones,
(iv) les anhydrides,
(v) les composés hydrocarbonés insaturés (CHI) ayant un caractère aromatique et/ou comportant au moins une double liaison carbone=carbone et/ou au moins une triple liaison C≡C, ces liaisons insaturées pouvant être conjuguées ou non conjuguées, lesdits CHI : étant linéaires ou cycliques (mono ou polycyclique), ayant de 4 à 30 atomes de carbone, ayant de 1 à 8 insaturations éthyléniques et/ou acétyléniques et comportant éventuellement un ou plusieurs hétéroatomes,
(vi) et leurs mélanges,

avec la condition selon laquelle quand l'auxiliaire comprend un ou plusieurs CHI tels que définis supra, alors ce (ces) CHI est (sont) mélangé(s) avec au moins un autre auxiliaire différent d'un CHI.

## Claims

**1.** Process for the preparation of a haloalkyldialkylhalosilane of formula (I) :

$$Hal\text{-----}(R^2R^3)Si\text{---}(CH_2)_s\text{---}Hal$$

by hydrosilylation reaction of a reaction medium comprising:

■ a silane of formula (II) :

$$Hal\text{---}(R^2R^3)Si\text{-}H$$

■ and an alkenyl halide of formula (III) :

$$CH{=}CH\text{-}(CH_2)_{s-2}Hal$$

■ in the presence of a catalytically effective amount of a hydrosilylation catalyst based on iridium in the oxidation state I or III,

in which formulae (I), (II), (III) :

- the symbol Hal represents a halogen atom chosen from the chlorine, bromine and iodine atoms,
- the symbols $R^2$ et $R^3$, which are identical or different, each represent a monovalent hydrocarbon group chosen from a linear or branched alkyl radical having from 1 to 6 carbon atoms and a phenyl radical, and
- s represents an integer between 2 and 10 inclusive,

the said process being **characterized in that** at least one auxiliary in the free or supported state selected from the group of compounds consisting of :

➢ (i) ketones,
➢ (ii) ethers,

➢ (iii) quinones,
➢ (iv) anhydrides,
➢ (v) unsaturated hydrocarbon compounds (UHC) having an aromatic nature and/or comprising at least one C=C double bond and/or at least one C≡C triple bond, it being possible for these unsaturated bonds to be conjugated or nonconjugated, the said UHCs being linear or cyclic (mono- or polycyclic), having from 4 to 30 carbon atoms, having from 1 to 8 ethylenic and/or acetylenic unsaturations and optionally comprising one or more heteroatoms,
➢ (vi) and their mixtures,

is added to the reaction medium, with the condition according to which, when the auxiliary comprises one or more UHCs as defined above, then this (these) UHC(s) is (are) mixed with at least one other auxiliary other than a UHC.

**2.** Process according to Claim 1, **characterized in that** it is employed a catalyst corresponding to the formula :

$$[Ir(R^4)_x(R^5)]_y \qquad (IV)$$

in which :

- the symbol $R^4$ represents either a monodentate ligand L and in this case x = 2, or a bidentate ligand $(L)_2$ and in this case x = 1, and
- the symbol $R^5$ represents, either Hal which represents a halogen atom chosen from the chlorine, bromine and iodine atoms, and in this case y = 2, or a ligand of type LX and in this case y = 1.

**3.** Process according to Claim 2, **characterized in that**, in the formula (IV) :

o $R^4$ is a ligand comprising at least one C=C double bond and/or at least one C≡C triple bond, it being possible for these unsaturated bonds to be conjugated or nonconjugated, the said ligand being linear or cyclic (mono- or polycyclic), having from 4 to 30 carbon atoms, having from 1 to 8 ethylenic and/or acetylenic unsaturations and optionally comprising one or more heteroatoms, and
o $R^5$, in addition to Hal, can also represent a ligand LX, such as in particular a ligand derived from acetylacetone, from a β-ketoester, from a malonic ester or from an allyl compound.

**4.** Process according to Claim 1, **characterized in that** the auxiliary is introduced into the reaction medium in the free state and according to a molar ratio, with respect to the iridium metal, of at least 0.2, preferably of at least 1 and more preferably of at least 100.

**5.** Process according to Claim 1, **characterized** :

➢ in that the auxiliary comprises at least one compound selected from the group of the UHCs (v), taken by themselves or as a mixture with one another,
➢ and in that the concentration of catalyst (preferably IV) is such that the iridium/silane of formula (II) molar ratio is less than or equal to $400 \times 10^{-6}$, preferably less than or equal to $200 \times 10^{-6}$,and, more preferably still less than or equal to $50 \times 10^{-6}$.

**6.** Process according to any one of Claims 1 to 5, **characterized in that** the auxiliary is selected from the group consisting of :

cyclohexanone, 2-cyclohexen-1-one, isophorone, 2-benzylidenecyclohexanone, 3-methylene-2-norbornanone, 4-hexen-3-one, 2-allylcyclohexanone, 2-oxo-1-cyclohexanepropionitrile, 2-(1-cyclohexenyl)cyclohexanone, monoglyme, ethylene glycol divinyl ether, ethyl ether, benzoquinone, phenylbenzoquinone, maleic anhydride, allyl succinic anhydride, 3-benzylidene-2,4-pentadione, phenothiazine, (methylvinyl)cyclotetrasiloxane (vinylated D4), 4-phenyl-3-butyn-2-one, 1,3-butadiene, 1,5-hexadiene, 1,3-cyclohexadiene, 1,5-cyclooctadiene (COD), 1,5,9-cyclododecatriene, divinyltetramethylsiloxane (DVTMS), norbornadiene and their mixtures.

**7.** Process according to any one of Claims 1 to 6, **characterized in that** the auxiliary is a mixture (vi) comprising at least one UHC (v), preferably COD, and at least one ketone (i), preferably cyclohexanone, and/or at least one ether (ii) and/or at least one quinone (iii).

**8.** Process according to Claim 7, **characterized in that** the concentration of catalyst, preferably of formula (IV), is such that the iridium / silane of formula (II) molar ratio is less than or equal to 100 x $10^{-6}$, preferably less than or equal to 60 x $10^{-6}$, and, more preferably still is between 40 x $10^{-6}$ and 1 x $10^{-6}$.

**9.** Process according to Claim 7, **characterized in that** the components of the mixture (vi) : UHC / (i) and/or (ii) and/or (iii) are present in the reaction medium when the reaction begins.

**10.** Process according to any one of Claims 1 to 9, **characterized in that** the product of formula (I) is 3-chloropropyldimethylchlorosilane, the product of formula (II) is dimethylhydrochlorosilane and the product of formula (III) is allyl chloride.

**11.** Catalytic system for the preparation of a haloalkyldialkylhalosilane of formula (I) :

$$Hal\text{-----}(R^2R^3)Si\text{---}(CH_2)_s\text{---}Hal$$

by hydrosilylation reaction of a reaction medium comprising:

■ a silane of formula (II) :

$$Hal\text{---}(R^2R^3)Si\text{-}H$$

■ and an alkenyl halide of formula (III) :

$$CH{=}CH\text{-}(CH_2)_{s-2}Hal$$

in which formulae :

- the symbol Hal represents a halogen atom chosen from the chlorine, bromine and iodine atoms,
- the symbols $R^2$ et $R^3$, which are identical or different, each represent a monovalent hydrocarbon group chosen from a linear or branched alkyl radical having from 1 to 6 carbon atoms and a phenyl radical, and
- s represents an integer between 2 and 10 inclusive,

**characterized in that** it comprises:

-1- a hydrosilylation catalyst corresponding to the formula :

$$[Ir(R^4)_x(R^5)]_y \qquad (IV)$$

in which :

- the symbol $R^4$ represents either a monodentate ligand L and in this case x = 2, or a bidentate ligand $(L)_2$ and in this case x = 1, and
- the symbol $R^5$ represents either Hal, Hal representing a halogen atom chosen from the chlorine, bromine and iodine atoms, and in this case y = 2, or a ligand of type LX, and in this case y = 1,

-2- and at least one auxiliary in the free or supported state selected from the group of compounds consisting of:

➢ (i) ketones,
➢ (ii) ethers,
➢ (iii) quinones,
➢ (iv) anhydrides,
➢ (v) unsaturated hydrocarbon compounds (UHC) having an aromatic nature and/or comprising at least one C=C double bond and/or at least one C≡C triple bond, it being possible for these unsaturated bonds to be conjugated or nonconjugated, the said UHCs being linear or cyclic (mono- or polycyclic), having from 4 to 30 carbon atoms, having from 1 to 8 ethylenic and/or acetylenic unsaturations and optionally comprising one or more heteroatoms,
➢ (vi) and their mixtures,

with the condition according to which, when the auxiliary comprises one or more UHCs as defined above, then this (these) UHC(s) is (are) mixed with at least one other auxiliary other than a UHC.

## Patentansprüche

1. Verfahren zur Herstellung eines Halogenalkyldialkylhalogensilans der Formel (I)

$$\mathbf{Hal{-}{-}{-}{-}{-}(R^2R^3)Si{-}{-}{-}(CH_2)_s{-}{-}{-}Hal}$$

durch Hydrosilylierungsreaktion eines Reaktionsmediums, welches aufweist:

- ein Silan der Formel (II):

$$\mathbf{Hal{-}{-}{-}(R^2R^3)Si{-}H}$$

- und ein Alkenhalogenid der Formel (III):

$$\mathbf{CH{=}CH{-}(CH_2)_{s-2}Hal}$$

- in Gegenwart einer katalytisch wirksamen Menge eines Hydrosilylierungskatalysators auf Basis von Iridium mit einer Oxidationsstufe I oder III,

wobei in den Formeln (I), (II), (III):

- das Symbol Hal ein Halogenatom darstellt, das aus den Atomen von Chlor, Brom oder Jod gewählt ist,
- die Symbole $R^2$ und $R^3$, identisch oder verschieden, jeweils eine monovalente Kohlenwasserstoffgruppe darstellen, die aus einem Alkylradikal, linear oder verzweigt, mit 1 bis 6 Kohlenstoffatomen und einem Phenylradikal gewählt ist und
- s eine ganze Zahl zwischen 2 und 10 einschließlich darstellt,

wobei das Verfahren **dadurch gekennzeichnet ist, dass** in dem Reaktionsmedium wenigstens ein Hilfsstoff in freiem oder getragenem Zustand hinzugefügt wird, gewählt aus der Gruppe von Verbindungen, die aufweist:

(i) die Ketone,
(ii) die Ether,
(iii) die Chinone,
(iv) die Anhydride,
(v) ungesättigte Kohlenwasserstoffverbindungen (CHI) mit einem aromatischen Charakter und/oder mit wenigstens einer Doppelbindung Kohlenstoff=Kohlenstoff und/oder wenigstens einer Dreifachbindung C ≡C, wobei diese ungesättigten Bindungen konjugiert oder nicht konjugiert sein können, wobei die CHI: linear oder zyklisch (mono- oder polyzyklisch) sind, mit 4 bis 30 Kohlenstoffatomen, die ein- bis achtfach ethylenisch und/oder acetylenisch ungesättigt sind und gegebenenfalls ein oder mehrere Heteroatome aufweisen,
(vi) sowie deren Gemische,

mit der Bedingung, dass, wenn der Hilfsstoff ein oder mehrere CHI wie oben definiert aufweist, der (die) CHI mit wenigstens einem weiteren Hilfsstoff, der ein anderer als ein CHI ist, gemischt wird (werden).

2. Verfahren gemäß Anspruch 1, **dadurch gekennzeichnet, dass** ein Katalysator verwendet wird, welcher der folgenden Formel entspricht:

$$\mathbf{[Ir(R^4)_x(R^5)]_y \qquad (IV)}$$

in welcher:

- das Symbol $R^4$ einen einzähnigen Liganden L aufweist, wobei in diesem Fall x = 2 ist, oder einen zweizähnigen Liganden $(L)_2$, wobei in diesem Fall x = 1 ist, und
- das Symbol $R^5$ darstellt entweder Hal, das ein Halogenatom gewählt aus den Atomen von Chlor, Brom und Jod ist, wobei in diesem Fall y = 2 ist, oder einen Liganden der Art LX, wobei in diesem Fall y = 1 ist.

**3.** Verfahren gemäß Anspruch 2, **dadurch gekennzeichnet, dass** in der Formel (IV):

- $R^4$ ein Ligand ist, der wenigstens eine Doppelbindung Kohlenstoff=Kohlenstoff und/oder wenigstens eine Dreifachbindung C≡C aufweist, wobei diese ungesättigten Bindungen konjugiert oder nicht konjugiert sein können, wobei der Ligand: linear oder zyklisch (mono- oder polyzyklisch) ist, mit 4 bis 30 Kohlenstoffatomen, die ein- bis achtfach ethylenisch und/oder acetylenisch ungesättigt sind und gegebenenfalls ein oder mehrere Heteroatome aufweisen, und
- $R^5$, außer Hal, auch einen Liganden LX darstellen kann, wie insbesondere einen Liganden, der ein Derivat von Acetylaceton, einem β-Ketoester, einem Malonester, einer Allylverbindung ist.

**4.** Verfahren gemäß Anspruch 1, **dadurch gekennzeichnet, dass** der Hilfsstoff in das Reaktionsmedium in einem freien Zustand mit einem Molverhältnis, bezogen auf das Iridiummetall, von wenigstens 0,2, vorzugsweise wenigstens 1, und noch bevorzugter wenigstens 100, eingebracht wird.

**5.** Verfahren gemäß Anspruch 1, **dadurch gekennzeichnet,:**

**dass** der Hilfsstoff wenigstens eine Verbindung aufweist, gewählt aus der Gruppe von CHI (v) einzeln oder als Gemisch,
**dass** die Konzentration an Katalysator (vorzugsweise IV) derart ist, dass das Molverhältnis Iridium/Silan der Formel (II), ausgedrückt in Mol, kleiner oder gleich $400 \cdot 10^{-6}$, vorzugsweise bis $200 \cdot 10^{-6}$, und noch bevorzugter bis $50 \cdot 10^{-6}$ ist.

**6.** Verfahren gemäß einem der Ansprüche 1 bis 5, **dadurch gekennzeichnet, dass** der Hilfsstoff gewählt wird aus der Gruppe, welche aufweist:

Cyclohexanon, 2-Cyclohexen-1-on, Isophoron, 2-Benzylidencyclohexanon, 3-Methylen-2-norbornanon, 4-Hexen-3-on, 2-Allylcyclohexanon, 2-Oxo-1-cyclohexanproprionitril, 2-(1-Cyclohexenyl)cyclohexanon, Monoglym, Ethylenglycoldivinylether, Ethylether, Benzochinon, Phenyl-benzochinon, Maleinsäureanhydrid, Allylbernsteinsäureanhydrid, 3-Benzyliden-2,4-pentadion, Phenothiazin, (Methylvinyl)cyclotetrasiloxan (vinyliertes D4), 4-Phenyl-3-butyn-2-on, 1,3-Butadien, 1,5-Hexadien, 1,3-Cyclohexadien, 1,5-Cyclooctadien (COD), 1,5,9-Cyclododecatrien, Divinyltetramethylsiloxan (DVTMS), Norbomadien sowie deren Gemische.

**7.** Verfahren gemäß einem der Ansprüche 1 bis 6, **dadurch gekennzeichnet, dass** der Hilfsstoff ein Gemisch (vi) ist, welches wenigstens ein CHI (v) - vorzugsweise COD - und wenigstens ein Keton (i) - vorzugsweise Cyclohexanon - und/oder wenigstens einen Ether (ii) und/oder wenigstens ein Chinon (iii) aufweist.

**8.** Verfahren gemäß Anspruch 7, **dadurch gekennzeichnet, dass** die Konzentration an Katalysator - vorzugsweise der Formel (IV) - derart ist, dass das Molverhältnis Iridium/Silan der Formel (II), ausgedrückt in Mol, kleiner oder gleich $100 \cdot 10^{-6}$, vorzugsweise bis $60 \cdot 10^{-6}$, und noch bevorzugter zwischen $40 \cdot 10^{-6}$ und $1 \cdot 10^{-6}$ ist.

**9.** Verfahren gemäß Anspruch 7, **dadurch gekennzeichnet, dass** die Bestandteile des Gemischs (vi): CHI / (i) und/oder (ii) und/oder (iii) in dem Reaktionsmedium vorhanden sind, wenn die Reaktion startet.

**10.** Verfahren gemäß einem der Ansprüche 1 bis 9, **dadurch gekennzeichnet, dass** das Produkt der Formel (I) 3-Chlorpropyldimethylchlorsilan ist, das Produkt der Formel (II) Dimethylwasserstoffchlorsilan ist, und das Produkt der Formel (III) Allylchlorid ist.

**11.** Katalytisches System für die Herstellung eines Halogenalkyldialkylhalogensilans der Formel (I):

$$\mathbf{Hal{-}{-}{-}{-}{-}(R^2R^3)Si{-}{-}{-}(CH_2)_s{-}{-}{-}Hal}$$

durch Hydrosilylierungsreaktion eines Reaktionsmediums, welches aufweist:

- ein Silan der Formel (II):

$$\mathbf{Hal{-}{-}{-}(R^2R^3)Si{-}H}$$

- und ein Alkenhalogenid der Formel (III):

**$CH=CH-(CH_2)_{s-2}Hal$**

wobei in den Formeln:

- das Symbol Hal ein Halogenatom darstellt, das aus den Atomen von Chlor, Brom oder Jod gewählt ist,
- die Symbole $R^2$ und $R^3$, identisch oder verschieden, jeweils eine monovalente Kohlenwasserstoffgruppe darstellen, die aus einem Alkylradikal, linear oder verzweigt, mit 1 bis 6 Kohlenstoffatomen und einem Phenylradikal gewählt ist, und
- s eine ganze Zahl zwischen 2 und 10 einschließlich darstellt,

**dadurch gekennzeichnet ist, dass** es aufweist:

-1- einen Hydrosilylierungskatalysator, der der folgenden Formel entspricht:

$$[Ir(R^4)_x(R^5)]_y \qquad (IV)$$

in welcher:

- das Symbol $R^4$ einen einzähnigen Liganden L aufweist, wobei in diesem Fall x = 2 ist, oder einen zweizähnigen Liganden $(L)_2$, wobei in diesem Fall x = 1 ist, und

das Symbol $R^5$ darstellt entweder Hal, wobei Hal ein Halogenatom darstellt, gewählt aus den Atomen von Chlor, Brom und Jod, wobei in diesem Fall y = 2 ist, oder einen Liganden der Art LX, wobei in diesem Fall y = 1 ist.

-2- und wenigstens einen Hilfsstoff in freiem oder getragenem Zustand, gewählt aus der Gruppe von Verbindungen, die aufweist:

(i) die Ketone,
(ii) die Ether,
(iii) die Chinone,
(iv) die Anhydride,
(v) ungesättigte Kohlenwasserstoffverbindungen (CHI) mit einem aromatischen Charakter und/oder mit wenigstens einer Doppelbindung Kohlenstoff=Kohlenstoff und/oder wenigstens einer Dreifachbindung C≡C, wobei diese ungesättigten Bindungen konjugiert oder nicht konjugiert sein können, wobei die CHI: linear oder zyklisch (mono- oder polyzyklisch) sind, mit 4 bis 30 Kohlenstoffatomen, die ein- bis achtfach ethylenisch und/oder acetylenisch ungesättigt sind und gegebenenfalls ein oder mehrere Heteroatome aufweisen,
(vi) sowie deren Gemische,

mit der Bedingung, dass, wenn der Hilfsstoff ein oder mehrere CHI wie oben definiert aufweist, der (die) CHI mit wenigstens einem weiteren Hilfsstoff, der ein anderer als ein CHI ist, gemischt wird (werden).

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 2938731 B
- JP 7126271 A
- EP 1156052 A
- US 6359161 B
- DE 10053037 A
- US 20020052520 A
- BE 785343 B
- US 3798252 B
- US 6177585 B
- GB 1526324 A
- PL 176036 A
- PL 174810 A
- PL 145670 A
- JP 75024947 A
- US 4820674 B
- JP 52093718 A


### Littérature non-brevet citée dans la description


- Chimie Organométallique de Didier ASTRUC. EDP Sciences, 2000, 31